# EUROPEAN PATENT SPECIFICATION

(11) **EP 3 575 649 B1**
(45) Date of publication and mention of the grant of the patent: **29.09.2021**
(21) Application number: 18745478.0
(22) Date of filing: 15.01.2018
(51) Int. Cl.: F16K 11/085, F16K 11/076, F16K 27/06, E03C 1/00

(54) **STRAIGHT-THROUGH SWITCHING VALVE**
STRAIGHT-THROUGH-SCHALTVENTIL
SOUPAPE DE COMMUTATION À PASSAGE DIRECT

(30) Priority: 24.01.2017 CN 201710059656; 24.01.2017 CN 201720104460 U
(43) Date of publication of application: 04.12.2019
(73) Proprietor: Xiamen Solex High-Tech Industries Co., Ltd., Xiamen, Fujian 361000 (CN)
(72) Inventor: LIN, Fangqi, Xiamen Fujian 361000 (CN); WEI, Zhijian, Xiamen Fujian 361000 (CN); HU, Lihong, Xiamen Fujian 361000 (CN); CHEN, Wenxing, Xiamen Fujian 361000 (CN)
(74) Representative: Lang, Christian
(86) International application number: PCT/CN2018/072554
(87) International publication number: WO 2018/137509

(56) References cited:
- EP-A2- 2 459 909
- CN-U- 201 705 973
- CN-U- 203 730 831
- CN-U- 203 730 831
- CN-U- 206 582 359
- CN-Y- 200 978 992
- CN-Y- 201 098 654
- CN-Y- 201 098 654
- DE-A1-102010 018 671
- DE-C1- 4 306 610
- US-A1- 2007 235 562
- US-A1- 2012 266 992

## Description

### FIELD OF THE INVENTION

The present invention relates to the field of a flow passage device, particularly, the present invention relates to a flow passage switching device.

### BACKGROUND OF THE INVENTION

The existing flow path switching valve mainly adopts a rotary switching method or a sliding switching method. The switching valve adopting the rotary switching method comprises a valve body, a switching unit and a rotating sleeve. The switching unit is assembled in the valve body in a rotatable manner, the rotating sleeve and the switching unit are coupled together, the users can rotate the rotating sleeve, so as to drive the switching unit to rotate relative to the valve body, thereby the switching function is achieved. The switching valve adopting the sliding switching method comprises a valve body, a switching unit and a sliding sleeve. The switching unit is connected to the valve body in a slidable manner, the sliding sleeve and the switching unit are coupled together, the users can slid the sliding sleeve to drive the switching unit sliding relative to the valve body, thereby the switching function is achieved. Regardless of whether it adopts a rotary switching method or a sliding switching method, the switching unit and the valve body cause friction during the switching process, and the sealing element of the switching unit is severely frictioned and easily damaged after being used for a long time. Moreover, the flow passage switching structure is complicated, and the occupied space is large, so that the flow passage area that can be used for the water flow is small, the overall size of the switching valve should be increased to achieve the object of a big flow volume , and the aesthetics of the appearance is relatively poor.

A prior art valve according to the preamble of claim 1 is disclosed in CN 203 730 831 U.

### SUMMARY OF THE INVENTION

The present invention provides a switching valve to solve the technical problem of the existing techniques, the switching valve can be used to connect with a shower head by a hard pipe or a flexible pipe, and the volume is small, the flow volume is large.

The present invention provides a straight-through switching valve, wherein comprises a valve core and a valve body, the valve core is inserted into the valve body; the valve core is respectively disposed with a first water outlet and a second water outlet along an axial direction; the valve body is provided with an accommodating cavity extending along an axial direction of the valve body, and the sidewall of the valve body is respectively provided with a first sealing member and a second sealing member connected to the accommodating cavity along the axial direction of the valve body, and the first sealing member and the second sealing member is disposed at an angle along a radial direction of the valve body;

the valve body is further respectively provided with a first water passage hole and a second water passage hole along the axial direction of the valve body, the water outflow direction of the first water passage hole is parallel to the axial direction of the valve body, and the water outflow direction of the second water passage hole is perpendicular to the axial direction of the valve body;

the valve core is inserted in the accommodating cavity along the axial direction, and can be rotated relative to the valve body around the axial direction in the accommodating cavity; when the first water outlet is connected to the first water passage hole, the second water outlet is sealed by the second sealing member; when the second water outlet is connected to the second water passage hole, the first water outlet is sealed by the first sealing member.

In a preferred embodiment, the first water passage hole and the second water passage hole are respectively disposed at the same height as the first sealing member and the second sealing member, and the first water passage hole is located above the second water passage hole along the axial direction of the valve body.

In another preferred embodiment, the first water passage hole comprises an inlet disposed along the radial direction and an outlet disposed along the axial direction; the outlet is gradually enlarged from the bottom to the top in the axial direction.

In another preferred embodiment, the first sealing member and the second sealing member is disposed at an angle of 90° along the radial direction of the valve body, also the first water passage hole and the second water passage hole is disposed at an angle of 90° along the radial direction of the valve body correspondingly.

In another preferred embodiment, the valve body comprises a mounting seat, and the side wall of the mounting seat is provided with a first mounting hole and a second mounting hole for mounting the first sealing member and the second sealing member along the radial direction of the valve body;

the sidewall of the mounting seat is further provided with the first water passage hole and the second water passage hole along the radial direction of the valve body.

In another preferred embodiment, the switching valve comprises two of the first mounting holes and two of the second mounting holes which are respectively located at the same height, and the two first mounting holes or the two second mounting holes are respectively disposed at an angle of 180°.

In another preferred embodiment, the first sealing member and the second sealing member respectively comprise two sealing portions disposed at an angle of 180°, and the two sealing portions are connected by a connecting member.

In another preferred embodiment, the valve core is provided with a water inlet at the lower end along the axial direction, and the water flows into the valve core from the water inlet along the axial direction, then flows out of the first water passage hole or the second water passage hole through the first water outlet or the second water outlet.

In another preferred embodiment, the switching valve further comprises a valve shell, the valve shell comprises a horizontal tube and a vertical tube which are disposed in a vertical connection; the valve body is embedded in the vertical tube, and the second water passage hole is connected to the horizontal tube.

In another preferred embodiment, a first sealing groove for mounting a third sealing member is disposed on the side wall of the mounting seat, and the first sealing groove is located between the first water passage hole and the second water passage hole; the third sealing member is contacted to the inner wall of the vertical tube, and can be used to separate the first water passage hole and the second water passage hole;

a second sealing groove for mounting a forth sealing member is further disposed on the side wall of the valve core, and the second sealing groove is located between the first water outlet and the second water outlet; the forth sealing member is contacted to the inner wall of the mounting seat, and can be used to separate the first water outlet and the second water outlet.

In another preferred embodiment, a movement restriction member is disposed between the vertical tube and the valve body, and when the valve core is rotated relative to the valve body, the valve body is kept stationary by the movement restriction member at all times.

In another preferred embodiment, the movement restriction member comprises a protrusion, which is convexly disposed on the side wall of the mounting seat and is protruded in the radial direction, and a groove, which is disposed on the inner side wall of the vertical tube, the protrusion is embedded into the groove, so that the rotation of the valve body around the axial direction can be restricted by the groove.

In another preferred embodiment, the switching valve further comprises an operating member; the operating member comprises a handle rod, a handle seat and a connecting member; the connecting member is disposed in the handle seat and is coupled with the handle seat; the connecting member is provided with a slot along the axial direction, the water inlet of the valve core is inserted into the slot and is coupled with the slot; the handle rod is fixedly mounted on the side wall of the connecting member in the radial direction; when the handle rod is pushed along the circumferential direction, the valve core will be rotated subsequently.

In another preferred embodiment, the first water passage hole is connected to an outflow passage of a top shower, and the second water passage hole is connected to an outflow passage of a hand-held shower.

Comparing with existing techniques, the technical solution of the present invention has the following beneficial effects:
1. The present invention provides a straight-through switching valve, which is provided with a first sealing member and a second sealing member in the axial direction of the valve body, the valve core is coupled with different sealing members during the rotating process, thereby the switching function of water passage is realized. Such a structure can realize the maximum use of the inner space of the tube, and the entire inner space of the valve core will not be blocked in the axial direction, and the water passage area is very large, even in case that the radial size of the entire switching valve is small, it can still satisfy an requirement of flow volume, so as to achieve an object of large flow volume with small volume.
2. The present invention provides a straight-through switching valve, in which a movement restriction member is arranged between the vertical tube and the valve body. When the valve core is rotated relative to the valve body, the valve body is kept stationary by the movement restriction member at all times. The positions of the first sealing member and the second sealing member can be kept fixed and will not be shifted. The sealing effect can be guaranteed.
3. The present invention provides a straight-through switching valve, in which the first sealing member and the second sealing member will not be provided with any water passage holes, and the valve body is provided with the mounting holes corresponding to the shape of the sealing members, and the two sealing members are respectively mounted in the mounting holes. When the valve core is rotated, the first sealing member and the second sealing member are supported by the mounting holes, so that the sealing members would not be turned up by a frictional force, the sealing performance will be better.
4. The present invention provides a straight-through switching valve, in which the outlet of the first water passage hole has an axial water outflow. In order to increase the water flow volume, the outlet of the first water passage hole is gradually enlarged, so that the water outflow volume of the first water passage hole can be increased, and the requirement for a large flow volume of the top shower can be satisfied.
5. The present invention provides a straight-through switching valve, in which the first sealing member and the second sealing member respectively comprise two face-to-face sealing portions disposed at an angle of 180°, the face-to-face sealing portions are symmetrically disposed, so that when the valve core is rotated, the valve core will not be eccentrically rotated by an counteraction force from one side of sealing portions, and the application is reliable.
6. The present invention provides a straight-through switching valve, in which the first sealing member and the second sealing member are spaced at an angle of 90° in the radial direction of the valve body, so that during the assembly process, the second sealing member will not be sharpened by the sharp corners in the connecting portion of the horizontal tube and the vertical tube, the assembly is convenient, safe and reliable.

### BRIEF DESCRIPTION OF THE DRAWINGS

FIG. 1 illustrates a perspective view of the appearance in the preferred embodiment of the present invention;
FIG. 2 illustrates an exploded perspective view of the structure in the preferred embodiment of the present invention;
FIG. 3 illustrates a schematic view of the passage in the preferred embodiment of the present invention when water flows out from a top shower;

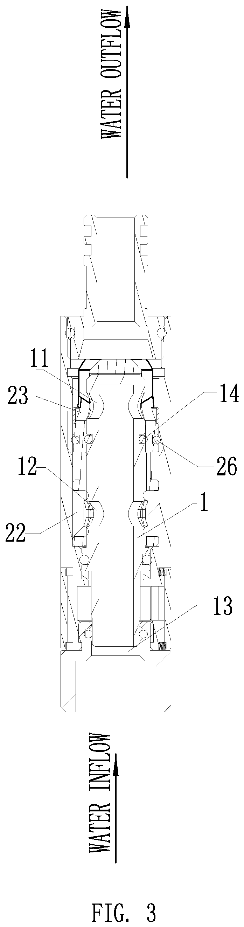

FIG. 3 illustrates a schematic view of the passage in the preferred embodiment of the present invention when water flows out from a hand-held shower.

### DETAILED DESCRIPTION OF THE ILLUSTRATED EMBODIMENTS

The present invention will be further described below with the combination of the accompanying drawings together with the embodiments.

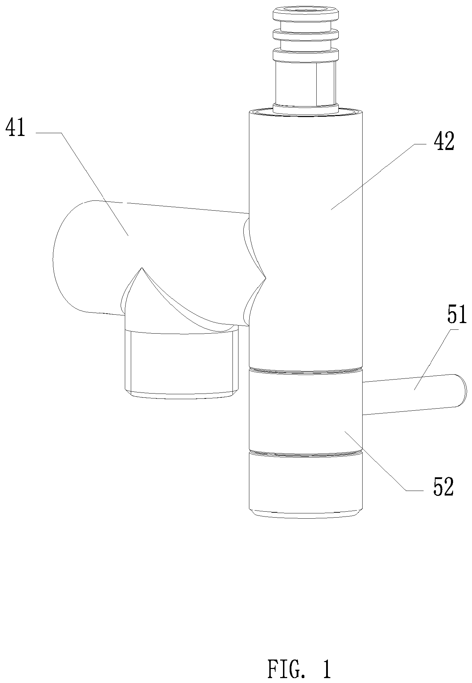

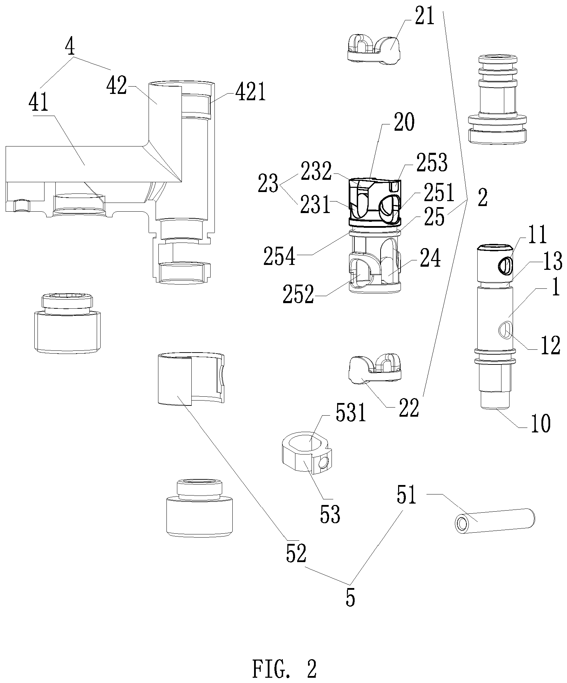

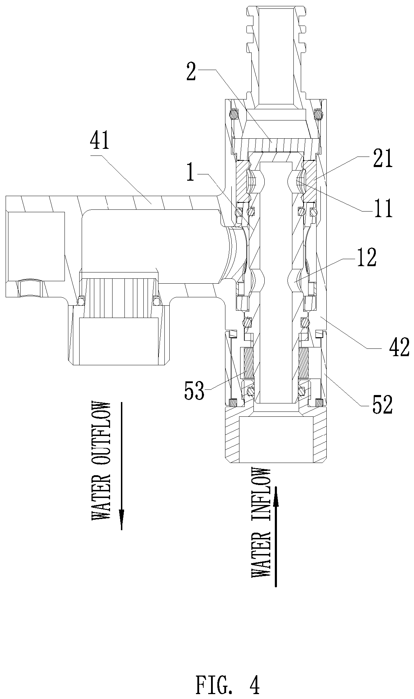

Referring to FIGS. 1-4, a straight-through switching valve comprises a valve core 1 and a valve body 2, the valve core 1 is inserted into the valve body 2; the valve core 1 is respectively provided with a first water outlet 11 and a second water outlet 12 along an axial direction; the valve body 2 is provided with an accommodating cavity 20 extending along an axial direction of the valve body, and the sidewall of the valve body 2 is respectively provided with a first sealing member 21 and a second sealing member 22 connected with the accommodating cavity 20 along the axial direction of the valve body. And the first sealing member 21 and the second sealing member 22 is disposed at an angle along a radial direction of the valve body; in this embodiment, the angle is preferably 90°, but is not limited to 90°, and a skilled person in the field can set and modify it as needed.

The valve body 2 is further respectively provided with a first water passage hole 23 and a second water passage hole 24 along the axial direction, wherein the water outflow direction of the first water passage hole 23 is parallel to the axial direction, and the water outflow direction of the second water passage hole 24 is perpendicular to the axial direction; in this embodiment, the first water passage hole 23 is connected with an outflow passage of a top shower, and the second water passage hole 24 is connected with an outflow passage of a hand-held shower. In this embodiment, the first water hole 23 and the second water hole 24 is correspondingly disposed at an angle of 90° in the radial direction of the valve body.

In this embodiment, the valve body 2 comprises a mounting seat 25, and the side wall of the mounting seat 25 is provided with a first mounting hole 251 for mounting the first sealing member 21 and a second mounting hole 252 for mounting the second sealing member 22 along the radial direction of the valve body. The side wall of the mounting seat 25 is further provided with the first water passage hole 23 and the second water passage hole 24 along the radial direction of the valve body.

The valve core 1 is inserted into the accommodating cavity 20 along the axial direction, and can be rotated relative to the valve body 2 around the axial direction in the accommodating cavity 20; when the first water outlet 11 is connected to the first water passage hole 23, the second water outlet 12 is sealed by the second sealing member 22; when the second water outlet 12 is connected to the second water passage hole 24, the first water outlet 11 is sealed by the first sealing member 21. Therefore, by the rotation of the valve core 1, the relative position between the valve core 1 and the valve body 2 will be changed, so that one of the first water outlet 11 and the second water outlet 12 will be sealed while the other will be opened, thereby the switching function of flow passage is realized. Such a structure can realize the maximum use of the inner space of the valve core 1, and the entire inner space of the valve core 1 is not blocked in the axial direction, and the water passage area is very large, even in case that the radial size of the entire switching valve is small, it can still satisfy an requirement of flow volume, so as to achieve an object of large flow volume with small volume.

In this embodiment, the first water passage hole 23 and the second water passage hole 24 are respectively disposed at the same height as the first sealing member 21 and the second sealing member 22, and the first water passage hole 23 is located above the second water passage hole 24 along the axial direction of the valve body. Since the water outflow direction of the first water passage hole 23 is upward in the axial direction, it is disposed above the second water passage hole 24 to ensure that the water flowing out from the first water passage hole 23 will not enter the second water passage hole 24, the function of the water outlet will not cause an error, and the stability of the function is better.

In this embodiment, the switching valve comprises two first mounting holes 251 and two second mounting holes 252. The two first mounting holes 251 and the two second mounting holes 252 are respectively disposed at an angle of 180°. Correspondingly, the first sealing member 21 and the second sealing member 22 respectively comprise two sealing portions disposed at an angle of 180°, and the two sealing portions are connected by a connecting member. By this structure, when the valve core 1 is rotated, the valve core 1 will not be eccentrically rotated by a counteraction force from one side of seal portions, and the application is reliable.

The first water passage hole 23 comprises an inlet 231 disposed along the radial direction and an outlet 232 disposed along the axial direction; the outlet 232 is gradually enlarged from the bottom to the top in the axial direction. The water flowing out of the first water outlet 11 is changed from an axial flow to an radial flow by the inlet 231, and then is changed to the axial flow again by the outlet 232, so as to meet the needs for the flow direction of the top shower. Moreover, the opening of the outlet 232 is gradually enlarged, so that the water flow volume entering into the top shower can be increased, and the requirement for a large flow volume of the top shower can be satisfied.

The valve core 1 is provided with a water inlet 10 at the lower end in the axial direction, and the water flows into the valve core 1 from the water inlet 10 in the axial direction, then flows out from the first water passage hole 23 or the second water passage hole 24 through the first water outlet 11 or the second water outlet 12. Thus, the water can completely flow into the valve core 1 in an axial state without any obstacle or turning, so that the passage set is simple, the water flows without any obstacle, and the flow volume and flow rate will not be greatly affected, so as to achieve an object of a small size with a high flow volume and a high flow rate.

In this embodiment, the switching valve further comprises a valve shell 4, the valve shell 4 comprises a horizontal tube 41 and a vertical tube 42, which are disposed in a vertical connection; the valve body 2 is embedded in the vertical tube 42 and the second water passage hole 24 is connected to the horizontal tube 41. Thus, the axial outflow in the valve core 1 can be converted into the radial outflow into the horizontal tube 41 by the second water hole 24 which comprises a radial water outflow. The horizontal tube 41 is connected to a flexible outflow pipe of a hand-held shower by an outflow nut, so that water can flow out from the hand-held shower. The vertical tube 42 is connected to a top shower.

In this embodiment, a first sealing groove 254 and a second sealing groove 13 are respectively annularly disposed on the side wall of the mounting seat 25 and the valve core 1, and the first sealing groove 254 is located between the first water passage hole 23 and the second water passage hole 24; the second sealing groove 13 is located between the first water outlet hole 11 and the second water outlet hole 12, at least a third sealing member 26 and a fourth sealing member 14 are respectively located in the first sealing groove 254 and the second sealing groove 13; wherein the third sealing member 26 is contacted with the inner wall of the vertical tube 42, and can be used to separate the water passage of the upper and lower portions between the outer wall of the valve body 2 and the inner wall of the vertical tube 42 in a sealing manner; the fourth sealing member 14 is contacted with the inner wall of the mounting seat 25, thereby can be used to separate the water passage between the upper and lower portions of the inner wall of the valve body 2 and the outer wall of the valve core 1 in a sealing manner, so that the two water passages will not interact with each other, and the function is relatively stable.

When the valve core 1 is rotated, the relative movement between the valve core 1 and the valve body 2 generates a frictional force, the frictional force can easily drive the valve body to move as well, thereby causes the position of the first seal member 21 and the second seal member 22 to be shifted, then the sealing effect will be affected. In order to avoid this situation, a movement restriction member is arranged between the vertical tube 42 and the valve body 2. When the valve core is rotated relative to the valve body, the valve body is kept stationary by the movement restriction member at all times.

In this embodiment, the movement restriction member comprises a protrusion 253, which is convexly disposed on the side wall of the mounting seat 25 and is protruded in the radial direction, and a groove 421, which is disposed on the inner side wall of the vertical tube 42. The protrusion 253 is embedded into the groove 421, so that the rotation of the valve body around the axial direction can be restricted by the groove 421, which ensures that the valve body 2 is always in the initial position without movement.

In this embodiment, in order to facilitate that the users rotate the valve core 1, the switching valve further comprises an operating member 5; the operating member 5 comprises a handle rod 51, a handle seat 52 and a connecting member 53; the connecting member 53 is disposed in the handle seat 52 and is coupled with the handle seat 52. The connecting member 53 comprises a slot 531 disposed along the axial direction, and the water inlet 10 of the valve core is inserted into the slot 531 and is coupled with the slot; the handle rod 51 is fixedly mounted on the side wall of the connecting member 53 in the radial direction; when the handle rod 51 is pushed along the circumferential direction, the valve core 1 will be rotated subsequently. According to this kind of set, the users can conveniently switch the water outflow function by pushing the handle rod 51.

The first sealing member 21 and the second sealing member 22 are spaced at an angle of 90° in the radial direction of the valve body, so that during the assembly process, the second sealing member 22 will not be sharpened by the sharp corners in the connecting portion of the horizontal tube 41 and the vertical tube 42, the assembly is convenient, safe and reliable.

It will be apparent to those skilled in the art that various modifications and variation can be made in the present invention without departing from the scope of the invention. Thus, it is intended that the present invention cover the modifications and variations of this invention provided they come within the scope of the appended claims and their equivalents.

### Industrial applicability

The present invention provides a straight-through switching valve, which is provided with a first sealing member and a second sealing member in the axial direction of the valve body, the valve core is coupled with different sealing members during the rotating process, thereby the switching function of water passage is realized. Such a structure can realize the maximum use of the inner space of the tube, and the entire inner space of the valve core will not be blocked in the axial direction, and the water passage area is very large, even in case that the radial size of the entire switching valve is small, it can still satisfy an requirement of flow volume, so as to achieve an object of large flow volume with small volume.

## Claims

1. A straight-through switching valve, comprising
a valve core and a valve body, the valve core (1) is inserted into the valve body (2); the valve core (1) is respectively disposed with a first water outlet (11) and a second water outlet (12) along an axial direction; the valve body (2) is provided with an accommodating cavity (20) extending along an axial direction of the valve body, and a sidewall of the valve body (2) is respectively provided with a first sealing member (21) and a second sealing member (22) connected to the accommodating cavity (20) along the axial direction of the valve body, and the first sealing member (21) and the second sealing member (22) are disposed at an angle along a radial direction of the valve body;
the valve body (2) is further respectively provided with a first water passage hole (23) and a second water passage hole (24) along the axial direction of the valve body, the water outflow direction of the first water passage hole (23) is parallel to the axial direction of the valve body, and the water outflow direction of the second water passage hole (24) is perpendicular to the axial direction of the valve body;
the valve core (1) is inserted in the accommodating cavity (20) along the axial direction, and can be rotated relative to the valve body (2) around the axial direction in the accommodating cavity (20); **characterized in that**, when the first water outlet (11) is connected to the first water passage hole (23), the second water outlet (12) is sealed by the second sealing member (22); when the second water outlet (12) is connected to the second water passage hole (24), the first water outlet (11) is sealed by the first sealing member (21).

2. The straight-through switching valve according to claim 1, **characterized in that** the first water passage hole (23) and the second water passage hole (24) are respectively disposed at the same height as the first sealing member (21) and the second sealing member (22), and the first water passage hole (23) is located above the second water passage hole (24) along the axial direction.

3. The straight-through switching valve according to claim 2, **characterized in that** the first water passage hole (23) comprises an inlet (231) disposed along the radial direction and an outlet (232) disposed along the axial direction; the outlet is gradually enlarged from the bottom to the top in the axial direction.

4. The straight-through switching valve according to claim 3, **characterized in that** the first sealing member (21) and the second sealing member (22) is disposed at an angle of 90° along the radial direction of the valve body, also the first water passage hole (23) and the second water passage hole (24) is disposed at an angle of 90° along the radial direction of the valve body correspondingly.

5. The straight-through switching valve according to claim 4, **characterized in that** the valve body (2) comprises a mounting seat (25), and the side wall of the mounting seat (25) is provided with a first mounting hole (251) for mounting the first sealing member (21) and a second mounting hole (252) for mounting the second sealing member (22) along the radial direction of the valve body;
the sidewall of the mounting seat (25) is further provided with the first water passage hole (23) and the second water passage hole (24) along the radial direction of the valve body.

6. The straight-through switching valve according to claim 5, **characterized in that** the switching valve comprises two of the first mounting holes (251) and two of the second mounting holes (252) which are respectively located at the same height, and the two first mounting holes (251) or the two second mounting holes (252) are respectively disposed at an angle of 180°.

7. The straight-through switching valve according to claim 6, **characterized in that** the first sealing member (21) and the second sealing member (22) respectively comprise two sealing portions disposed at an angle of 180°, and the two sealing portions are connected by a connecting member.

8. The straight-through switching valve according to claim 7, **characterized in that** the valve core (1) is provided with a water inlet (10) at the lower end along the axial direction, and the water flows into the valve core (1) from the water inlet (10) along the axial direction, then flows out of the first water passage hole (23) or the second water passage hole (24) through the first water outlet (11) or the second water outlet (12).

9. The straight-through switching valve according to claim 8, **characterized in that** the switching valve further comprises a valve shell (4), the valve shell (4) comprises a horizontal tube (41) and a vertical tube (42) which are disposed in a vertical connection; the valve body (1) is embedded in the vertical tube (42), and the second water passage hole (24) is connected to the horizontal tube (41).

10. The straight-through switching valve according to claim 9, **characterized in that** a first sealing groove (254) for mounting a third sealing member (26) is disposed on the side wall of the mounting seat (25), and the first sealing groove (254) is located between the first water passage hole (23) and the second water passage hole (24); the third sealing member (26) is contacted to the inner wall of the vertical tube (42), and can be used to separate the first water passage hole (23) and the second water passage hole (24);
a second sealing groove (13) for mounting a forth sealing member (14) is further disposed on the side wall of the valve core (1), and the second sealing groove (13) is located between the first water outlet (11) and the second water outlet (12); the forth sealing member (14) is contacted to the inner wall of the mounting seat (25), and can be used to separate the first water outlet (11) and the second water outlet (12).

11. The straight-through switching valve according to claim 10, **characterized in that** a movement restriction member is disposed between the vertical tube (42) and the valve body (2), and when the valve core (1) is rotated relative to the valve body (2), the valve body (2) is kept stationary by the movement restriction member at all times.

12. The straight-through switching valve according to claim 11, **characterized in that** the movement restriction member comprises a protrusion (253), which is convexly disposed on the side wall of the mounting seat (25) and is protruded in the radial direction, and a groove (421), which is disposed on the inner side wall of the vertical tube (42), the protrusion (253) is embedded into the groove (421), so that the rotation of the valve body (2) around the axial direction can be restricted by the groove (421).

13. The straight-through switching valve according to claim 12, **characterized in that** the switching valve further comprises an operating member (5); the operating member (5) comprises a handle rod (51), a handle seat (52) and a connecting member (53); the connecting member (53) is disposed in the handle seat (52) and is coupled with the handle seat (52); the connecting member (53) is provided with a slot (531) along the axial direction, the water inlet (10) of the valve core (1) is inserted into the slot (531) and is coupled with the slot (531); the handle rod (51) is fixedly mounted on the side wall of the connecting member (53) in the radial direction; when the handle rod (51) is pushed along the circumferential direction, the valve core (1) will be rotated subsequently.

14. The straight-through switching valve according to any one of claims 1 to 13, **characterized in that** the first water passage hole (23) is connected to an outflow passage of a top shower, and the second water passage hole (24) is connected to an outflow passage of a hand-held shower.

## Patentansprüche

1. Durchgangsschaltventil, umfassend
einen Ventileinsatz und einen Ventilkörper, wobei der Ventileinsatz (1) in den Ventilkörper (2) eingesetzt ist, wobei der Ventileinsatz (1) entsprechend mit einem ersten Wasserauslass (11) und einem zweiten Wasserauslass (12) entlang einer axialen Richtung angeordnet ist, wobei der Ventilkörper (2) mit einem Aufnahmehohlraum (20) versehen ist, der sich entlang einer axialen Richtung des Ventilkörpers erstreckt, und wobei eine Seitenwand des Ventilkörpers (2) entsprechend mit einem ersten Dichtungselement (21) und einem zweiten Dichtungselement (22) versehen ist, die mit dem Aufnahmehohlraum (20) entlang der axialen Richtung des Ventilkörpers verbunden sind, und wobei das erste Dichtungselement (21) und das zweite Dichtungselement (22) unter einem Winkel entlang einer radialen Richtung des Ventilkörpers angeordnet sind,
wobei der Ventilkörper (2) ferner entsprechend mit einer ersten Wasserdurchgangsöffnung (23) und einer zweiten Wasserdurchgangsöffnung (24) entlang der axialen Richtung des Ventilkörpers versehen ist, wobei die Wasserausflussrichtung der ersten Wasserdurchgangsöffnung (23) parallel zu der axialen Richtung des Ventilkörpers ist und die Wasserausflussrichtung der zweiten Wasserdurchgangsöffnung (24) senkrecht zu der axialen Richtung des Ventilkörpers ist, wobei der Ventileinsatz (1) in den Aufnahmehohlraum (20) entlang der axialen Richtung eingesetzt ist und relativ zu dem Ventilkörper (2) um die axiale Richtung in dem Aufnahmehohlraum (20) gedreht werden kann, **dadurch gekennzeichnet, dass**, wenn der erste Wasserauslass (11) mit der ersten Wasserdurchgangsöffnung (23) verbunden ist, der zweite Wasserauslass (12) durch das zweite Dichtungselement (22) abgedichtet ist, wobei, wenn der zweite Wasserauslass (12) mit der zweiten Wasserdurchgangsöffnung (24) verbunden ist, der erste Wasserauslass (11) durch das erste Dichtungselement (21) abgedichtet ist.

2. Durchgangsschaltventil nach Anspruch 1, **dadurch gekennzeichnet, dass** die erste Wasserdurchgangsöffnung (23) und die zweite Wasserdurchgangsöffnung (24) jeweils auf der gleichen Höhe wie das erste Dichtungselement (21) und das zweite Dichtungselement (22) angeordnet sind und die erste Wasserdurchgangsöffnung (23) entlang der axialen Richtung über der zweiten Wasserdurchgangsöffnung (24) angeordnet ist.

3. Durchgangsschaltventil nach Anspruch 2, **dadurch gekennzeichnet, dass** die erste Wasserdurchgangsöffnung (23) einen in radialer Richtung angeordneten Einlass (231) und einen in axialer Richtung angeordneten Auslass (232) aufweist, wobei der Auslass in axialer Richtung von unten nach oben allmählich vergrößert ist.

4. Durchgangsschaltventil nach Anspruch 3, **dadurch gekennzeichnet, dass** das erste Dichtungselement (21) und das zweite Dichtungselement (22) in einem Winkel von 90° entlang der radialen Richtung des Ventilkörpers angeordnet ist, ebenso ist die erste Wasserdurchgangsöffnung (23) und die zweite Wasserdurchgangsöffnung (24) entsprechend in einem Winkel von 90° entlang der radialen Richtung des Ventilkörpers angeordnet.

5. Durchgangsschaltventil nach Anspruch 4, **dadurch gekennzeichnet, dass** der Ventilkörper (2) einen Montagesitz (25) aufweist und die Seitenwand des Montagesitzes (25) mit einer ersten Montageöffnung (251) zur Montage des ersten Dichtungselements (21) und einer zweiten Montageöffnung (252) zur Montage des zweiten Dichtungselements (22) entlang der radialen Richtung des Ventilkörpers versehen ist,
wobei die Seitenwand des Montagesitzes (25) ferner mit der ersten Wasserdurchgangsöffnung (23) und der zweiten Wasserdurchgangsöffnung (24) entlang der radialen Richtung des Ventilkörpers versehen ist.

6. Durchgangsschaltventil nach Anspruch 5, **dadurch gekennzeichnet, dass** das Schaltventil zwei der ersten Montageöffnungen (251) und zwei der zweiten Montageöffnungen (252) aufweist, die jeweils auf der gleichen Höhe angeordnet sind, und die beiden ersten Montageöffnungen (251) oder die beiden zweiten Montageöffnungen (252) jeweils in einem Winkel von 180° angeordnet sind.

7. Durchgangsschaltventil nach Anspruch 6, **dadurch gekennzeichnet, dass** das erste Dichtungselement (21) und das zweite Dichtungselement (22) entsprechend zwei unter einem Winkel von 180° angeordnete Dichtungsabschnitte aufweisen und die beiden Dichtungsabschnitte durch ein Verbindungselement verbunden sind.

8. Durchgangsschaltventil nach Anspruch 7, **dadurch gekennzeichnet, dass** der Ventileinsatz (1) am unteren Ende in axialer Richtung mit einem Wassereinlass (10) versehen ist und das Wasser aus dem Wassereinlass (10) in axialer Richtung in den Ventileinsatz (1) einströmt und dann aus der ersten Wasserdurchgangsöffnung (23) oder der zweiten Wasserdurchgangsöffnung (24) durch den ersten Wasserauslass (11) oder den zweiten Wasserauslass (12) fließt.

9. Durchgangsschaltventil nach Anspruch 8, **dadurch gekennzeichnet, dass** das Schaltventil ferner einen Ventilmantel (4) umfasst, wobei der Ventilmantel (4) ein horizontales Rohr (41) und ein vertikales Rohr (42) umfasst, die in einer vertikalen Verbindung angeordnet sind, wobei der Ventilkörper (2) in dem vertikalen Rohr (42) eingebettet ist und die zweite Wasserdurchgangsöffnung (24) mit dem horizontalen Rohr (41) verbunden ist.

10. Durchgangsschaltventil nach Anspruch 9, **dadurch gekennzeichnet, dass** an der Seitenwand des Montagesitzes (25) eine erste Dichtungsnut (254) zur Montage eines dritten Dichtungselementes (26) angeordnet ist und die erste Dichtungsnut (254) zwischen der ersten Wasserdurchgangsöffnung (23) und der zweiten Wasserdurchgangsöffnung (24) angeordnet ist, wobei das dritte Dichtungselement (26) an der Innenwand des vertikalen Rohres (42) anliegt, und zur Trennung der ersten Wasserdurchgangsöffnung (23) und der zweiten Wasserdurchgangsöffnung (24) verwendet werden kann,
und dass eine zweite Dichtungsnut (13) zur Montage eines vierten Dichtungselements (14) ferner an der Seitenwand des Ventileinsatzes (1) angeordnet ist und die zweite Dichtungsnut (13) sich zwischen dem ersten Wasserauslass (11) und dem zweiten Wasserauslass (12) befindet, wobei das vierte Dichtungselement (14) mit der Innenwand des Montagesitzes (25) in Kontakt ist und zum Trennen des ersten Wasserauslasses (11) und des zweiten Wasserauslasses (12) verwendet werden kann.

11. Durchgangsschaltventil nach Anspruch 10, **dadurch gekennzeichnet, dass** zwischen dem vertikalen Rohr (42) und dem Ventilkörper (2) ein Bewegungsbegrenzungselement angeordnet ist und dass bei einer Drehung des Ventileinsatzes (1) relativ zum Ventilkörper (2), der Ventilkörper (2) durch das Bewegungsbegrenzungselement stets stationär gehalten wird.

12. Durchgangsschaltventil nach Anspruch 11, **dadurch gekennzeichnet, dass** das Bewegungsbegrenzungselement einen an der Seitenwand des Montagesitzes (25) konvex angeordneten und in radialer Richtung vorstehenden Vorsprung (253) und eine an der inneren Seitenwand des vertikalen Rohrs (42) angeordnete Nut (421) aufweist, wobei der Vorsprung (253) in die Nut (421) eingebettet ist, so dass die Drehung des Ventilkörpers (2) um die axiale Richtung durch die Nut (421) begrenzt werden kann.

13. Durchgangsschaltventil nach Anspruch 12, **dadurch gekennzeichnet, dass** das Schaltventil ferner ein Betätigungselement (5) umfasst, wobei das Betätigungselement (5) eine Griffstange (51), einen Griffsitz (52) und ein Verbindungselement (53) umfasst, wobei das Verbindungselement (53) in dem Griffsitz (52) angeordnet und mit dem Griffsitz (52) gekoppelt ist, wobei das Verbindungselement (53) mit einem Schlitz (531) entlang der axialen Richtung versehen ist und der Wassereinlass (10) des Ventileinsatzes (1) in den Schlitz (531) eingeführt und mit dem Schlitz (531) gekoppelt ist, wobei die Griffstange (51) fest an der Seitenwand des Verbindungselements (53) in der radialen Richtung angebracht ist, wobei, wenn die Griffstange (51) entlang der Umfangsrichtung geschoben wird, der Ventileinsatz (1) anschließend gedreht wird.

14. Durchgangsschaltventil nach einem der Ansprüche 1 bis 13, **dadurch gekennzeichnet, dass** die erste Wasserdurchgangsöffnung (23) mit einem Abflusskanal einer Kopfbrause und die zweite Wasserdurchgangsöffnung (24) mit einem Abflusskanal einer Handbrause verbunden ist.

## Revendications

1. Vanne de commutation à passage direct, comprenant
un noyau de vanne et un corps de vanne, le noyau de vanne (1) est inséré dans le corps de vanne (2); le noyau de vanne (1) est disposé respectivement avec une première sortie d'eau (11) et une seconde sortie d'eau (12) le long d'une direction axiale; le corps de vanne (2) est pourvu d'une cavité de réception (20) s'étendant le long d'une direction axiale du corps de vanne, et une paroi latérale du corps de vanne (2) est pourvue respectivement d'un premier élément d'étanchéité (21) et d'un deuxième élément d'étanchéité (22) reliés à la cavité de réception (20) le long de la direction axiale du corps de vanne, et le premier élément d'étanchéité (21) et le deuxième élément d'étanchéité (22) sont disposés à un angle le long d'une direction radiale du corps de vanne;
le corps de vanne (2) est en outre pourvu respectivement d'un premier trou de passage d'eau (23) et d'un second trou de passage d'eau (24) le long de la direction axiale du corps de vanne, la direction d'écoulement d'eau du premier trou de passage d'eau (23) est parallèle à la direction axiale du corps de vanne, et la direction d'écoulement d'eau du second trou de passage d'eau (24) est perpendiculaire à la direction axiale du corps de vanne;
le noyau de vanne (1) est inséré dans la cavité de réception (20) le long de la direction axiale, et peut tourner par rapport au corps de vanne (2) autour de la direction axiale dans la cavité de réception (20); **caractérisée en ce que**,
lorsque la première sortie d'eau (11) est reliée au premier trou de passage d'eau (23), la seconde sortie d'eau (12) est étanchéifiée par le deuxième élément d'étanchéité (22) ; lorsque la seconde sortie d'eau (12) est reliée au second trou de passage d'eau (24), la première sortie d'eau (11) est étanchéifiée par le premier élément d'étanchéité (21).

2. Vanne de commutation à passage direct selon la revendication 1, **caractérisée en ce que** le premier trou de passage d'eau (23) et le second trou de passage d'eau (24) sont disposés respectivement à la même hauteur que le premier élément d'étanchéité (21) et le deuxième élément d'étanchéité (22), et le premier trou de passage d'eau (23) est situé au-dessus du second trou de passage d'eau (24) le long de la direction axiale.

3. Vanne de commutation à passage direct selon la revendication 2, **caractérisée en ce que** le premier trou de passage d'eau (23) comprend une entrée (231) disposée le long de la direction radiale et une sortie (232) disposée le long de la direction axiale; la sortie s'agrandit progressivement de bas en haut dans la direction axiale.

4. Vanne de commutation à passage direct selon la revendication 3, **caractérisée en ce que** le premier élément d'étanchéité (21) et le deuxième élément d'étanchéité (22) est disposé à un angle de 90° le long de la direction radiale du corps de vanne, de plus le premier trou de passage d'eau (23) et le second trou de passage d'eau (24) est disposé à un angle de 90° le long de la direction radiale du corps de vanne de manière correspondante.

5. Vanne de commutation à passage direct selon la revendication 4, **caractérisée en ce que** le corps de vanne (2) comprend un siège de montage (25), et la paroi latérale du siège de montage (25) est pourvue d'un premier trou de montage (251) permettant de monter le premier élément d'étanchéité (21) et d'un second trou de montage (252) permettant de monter le deuxième élément d'étanchéité (22) le long de la direction radiale du corps de vanne;
la paroi latérale du siège de montage (25) est en outre pourvue du premier trou de passage d'eau (23) et du second trou de passage d'eau (24) le long de la direction radiale du corps de vanne.

6. Vanne de commutation à passage direct selon la revendication 5, **caractérisée en ce que** la vanne de commutation comprend deux des premiers trous de montage (251) et deux des seconds trous de montage (252) qui sont situés respectivement à la même hauteur, et les deux premiers trous de montage (251) ou les deux seconds trous de montage (252) sont disposés respectivement à un angle de 180°.

7. Vanne de commutation à passage direct selon la revendication 6, **caractérisée en ce que** le premier élément d'étanchéité (21) et le deuxième élément d'étanchéité (22) comprennent respectivement deux portions d'étanchéité disposées à un angle de 180°, et les deux portions d'étanchéité sont reliées par un élément de liaison.

8. Vanne de commutation à passage direct selon la revendication 7, **caractérisée en ce que** le noyau de vanne (1) est pourvu d'une entrée d'eau (10) à l'extrémité inférieure le long de la direction axiale, et l'eau s'écoule dans le noyau de vanne (1) depuis l'entrée d'eau (10) le long de la direction axiale, puis s'écoule hors du premier trou de passage d'eau (23) ou du second trou de passage d'eau (24) par l'intermédiaire de la première sortie d'eau (11) ou de la seconde sortie d'eau (12).

9. Vanne de commutation à passage direct selon la revendication 8, **caractérisée en ce que** la vanne de commutation comprend en outre une enveloppe de vanne (4), l'enveloppe de vanne (4) comprend un tube horizontal (41) et un tube vertical (42) qui sont disposés en liaison verticale ; le corps de vanne (1) est incorporé dans le tube vertical (42), et le second trou de passage d'eau (24) est relié au tube horizontal (41).

10. Vanne de commutation à passage direct selon la revendication 9, **caractérisée en ce qu'**une première rainure d'étanchéité (254) permettant de monter un troisième élément d'étanchéité (26) est disposée sur la paroi latérale du siège de montage (25), et la première rainure d'étanchéité (254) est située entre le premier trou de passage d'eau (23) et le second trou de passage d'eau (24) ; le troisième élément d'étanchéité (26) est en contact avec la paroi intérieure du tube vertical (42), et peut être utilisé pour séparer le premier trou de passage d'eau (23) et le second trou de passage d'eau (24);
une seconde rainure d'étanchéité (13) permettant de monter un quatrième élément d'étanchéité (14) est en outre disposée sur la paroi latérale du noyau de vanne (1), et la seconde rainure d'étanchéité (13) est située entre la première sortie d'eau (11) et la seconde sortie d'eau (12) ; le quatrième élément d'étanchéité (14) est en contact avec la paroi intérieure du siège de montage (25), et peut être utilisé pour séparer la première sortie d'eau (11) et la seconde sortie d'eau (12).

11. Vanne de commutation à passage direct selon la revendication 10, **caractérisée en ce qu'**un élément de limitation de mouvement est disposé entre le tube vertical (42) et le corps de vanne (2), et lorsque le noyau de vanne (1) tourne par rapport au corps de vanne (2), le corps de vanne (2) est maintenu immobile par l'élément de limitation de mouvement à tout moment.

12. Vanne de commutation à passage direct selon la revendication 11, **caractérisée en ce que** l'élément de limitation de mouvement comprend une saillie (253), qui est disposée de manière convexe sur la paroi latérale du siège de montage (25) et fait saillie dans la direction radiale, et une rainure (421), qui est disposée sur la paroi latérale intérieure du tube vertical (42), la saillie (253) est incorporée dans la rainure (421), de façon à ce que la rotation du corps de vanne (2) autour de la direction axiale puisse être limitée par la rainure (421).

13. Vanne de commutation à passage direct selon la revendication 12, **caractérisée en ce que** la vanne de commutation comprend en outre un élément d'actionnement (5) ; l'élément d'actionnement (5) comprend une tige de poignée (51), un siège de poignée (52) et un élément de liaison (53) ; l'élément de liaison (53) est disposé dans le siège de poignée (52) et est accouplé au siège de poignée (52) ; l'élément de liaison (53) est pourvu d'une fente (531) le long de la direction axiale, l'entrée d'eau (10) du noyau de vanne (1) est insérée dans la fente (531) et est accouplée à la fente (531) ; la tige de poignée (51) est montée de manière fixe sur la paroi latérale de l'élément de liaison (53) dans la direction radiale ; lorsque la tige de poignée (51) est poussée le long de la direction circonférentielle, le noyau de vanne (1) tournera par la suite.

14. Vanne de commutation à passage direct selon l'une quelconque des revendications 1 à 13, **caractérisée en ce que** le premier trou de passage d'eau (23) est relié à un passage d'écoulement d'une pomme haute, et le second trou de passage d'eau (24) est relié à un passage d'écoulement d'une pomme de main.
